Europäisches Patentamt

European Patent Office

Office européen des brevets

(19)

(11) EP 0 849 919 A2

(12) EUROPEAN PATENT APPLICATION

(43) Date of publication:
24.06.1998 Bulletin 1998/26

(51) Int Cl.6: H04L 27/26, H04L 25/03

(21) Application number: 97309713.2

(22) Date of filing: 02.12.1997

(84) Designated Contracting States:
AT BE CH DE DK ES FI FR GB GR IE IT LI LU MC NL PT SE
Designated Extension States:
AL LT LV MK RO SI

(30) Priority: 19.12.1996 US 769963

(71) Applicant: LUCENT TECHNOLOGIES INC.
Murray Hill, New Jersey 07974-0636 (US)

(72) Inventors:
• Daneshrad, Babak
  Los Angeles, California 90024 (US)
• Galicia, Felicisimo W.
  Cambridge, Massachusetts 02138 (US)

(74) Representative:
Watts, Christopher Malcolm Kelway, Dr. et al
Lucent Technologies (UK) Ltd,
5 Mornington Road
Woodford Green Essex, IG8 0TU (GB)

(54) Shaping functions for multicarrier modulation systems

(57) Blocks of data conforming to orthogonal frequency division multiplexing (OFDM) are generated (e. g., using an inverse fast Fourier transform) and extensions are added to each end of each block. A shaping function, such as a raised cosine shaping function, is then applied to the ends of each extended block, where the effects of the shaping function extend into the original OFDM data. The shaped blocks of data are then serialized and converted to analog signals for transmission. At the receiver, received signals are digitized and sampled. The blocks of sampled data are then padded and the resulting padded blocks of data are input to a Fourier transform to recover the original OFDM data. By shaping the extended blocks in the transmitter and padding the sampled data for input to a larger Fourier transform in the receiver, the OFDM modulation scheme of the present invention can reduce the effects of carrier frequency offset and allow more efficient use of available bandwidth than conventional OFDM communications schemes.

FIG. 5

500

## Description

## BACKGROUND OF THE INVENTION

### Field of the Invention

The present invention relates to communications, and, in particular, to communications based on orthogonal frequency division multiplexing.

### Description of the Related Art

Orthogonal frequency division multiplexing (OFDM) is a modulation technique that has recently enjoyed a revival of sorts. OFDM is a block-oriented modulation scheme *that maps N data symbols into N orthogonal carriers separated by a distance of* $1/T$, where $T$ is the block period. It has applications in systems for asymmetric digital subscriber loop (ADSL) services, digital audio broadcasting (DAB), and possibly high-speed wireless local area network (LAN) communication. OFDM's attractiveness for wireless data transmission stems from its ability to overcome easily the effects of multipath on the channel without the need for equalization.

An OFDM modulator converts a serial data stream into a block of $N$ complex symbols at a rate of $f_{block} = \frac{f_s}{N}$ where $f_s$ is the data rate of the serial data stream. The symbols may be drawn from any one of the conventional linear modulation techniques. Next an inverse fast Fourier transform (IFFT) is performed on the block which is then cyclic prefixed to preserve the orthogonality of the IFFT-FFT pair in the presence of multipath. The resulting block is sent out on the channel serially with appropriate guard intervals inserted between blocks to guard against inter-block interference.

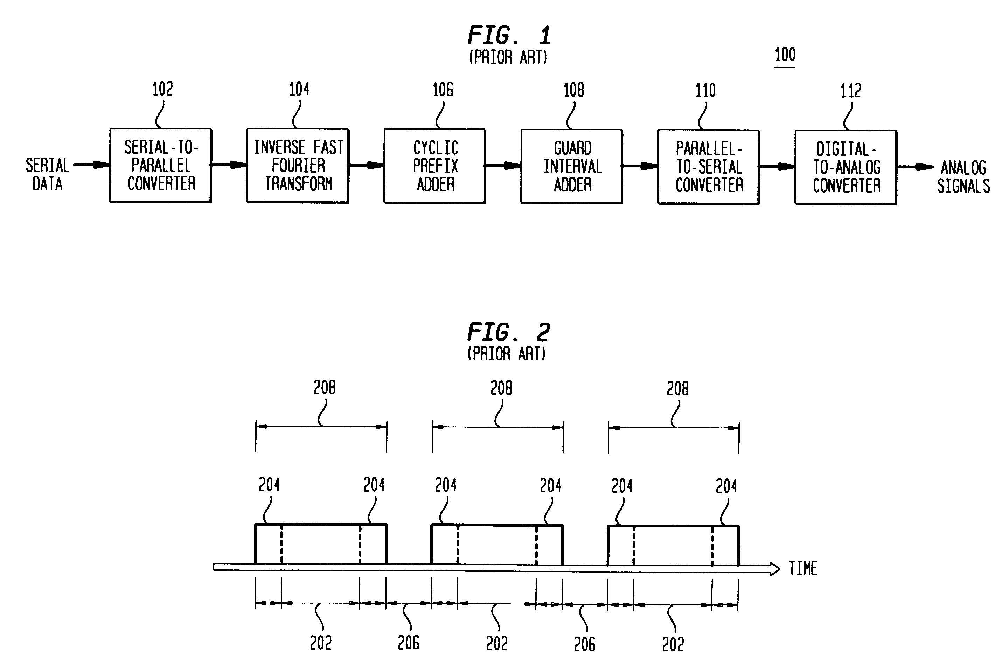

Referring now to Fig. 1, there is shown a block diagram of a conventional OFDM modulator **100**. Serial-to-parallel (S/P) converter **102** converts a serial input data stream into $N$ parallel streams of complex symbols $x(n)$, such that:

$$x(n) = x_r(n) + jx_i(n); \quad n = 0, ..., N\text{-}1$$

Inverse fast Fourier transform **104** is then applied to the $N$ symbol streams. Cyclic prefix adder **106** adds extensions to both sides of each resulting data block and guard interval adder **108** adds a guard interval between each pair of extended blocks. Parallel-to-serial (P/S) converter **110** converts the data into a serial data stream which is converted by digital-to-analog (D/A) converter **112** into analog signals for transmission.

Referring now to Fig. 2, there is shown a representation of the data generated by OFDM modulator **100** of Fig. 1. An extension **204** is added to each end of each block of OFDM data (**202**) to generate each extended block **208**. For example, if a given block of OFDM data has $N$=16 samples, represented as follows:

s0 s1 s2 s3 s4 s5 s6 s7 s8 s9 s10 s11 s12 s13 s14 s15

then a typical scheme for adding extensions would involve copying data from the end of the data block (e.g., the three samples s13 s14 s15) to append to the beginning and copying data from the beginning of the data block (e.g., the three samples s0 s1 s2) to append to the end, such that the extended block would be represented as follows:

s13 s14 s15 s0 s1 s2 s3 s4 s5 s6 s7 s8 s9 s10 s11 s12 s13 s14 s15 s0 s1 s2

In this example, there are $N+M$ samples in each extended block, where $N$=16 and $M$=6. Consecutive extended blocks **208** are then separated by guard interval **206**.

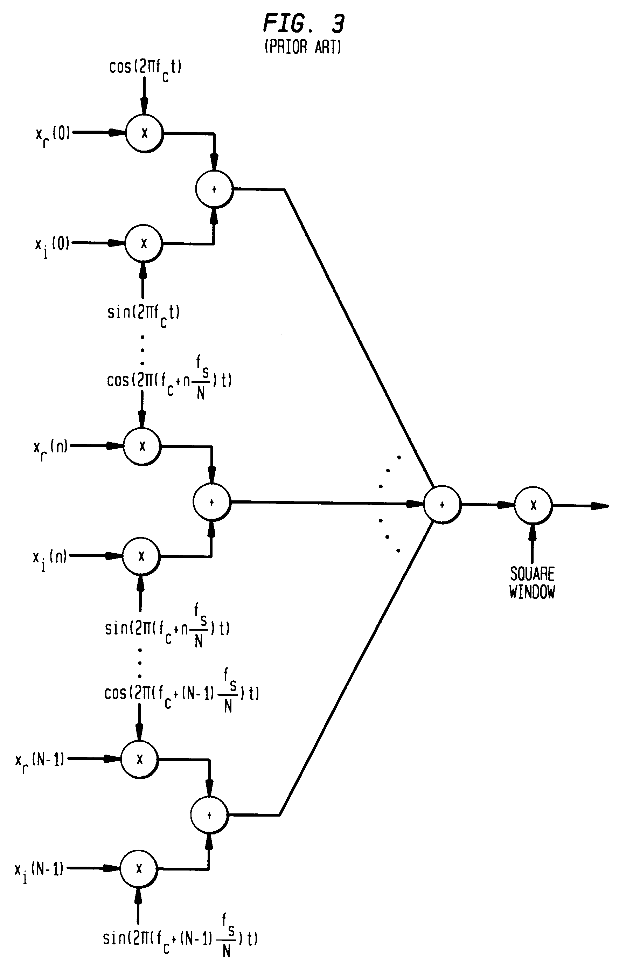

Conceptually OFDM may be thought of as a bank of $N$ parallel quadrature mixers with frequency spacing

$$\left( \frac{f_s}{N} \right)$$

followed by a square windowing operation, as shown in Fig. 3. For rectangular blocks and ignoring the effects of $x_r(n)$ and $x_i(n)$, the frequency response of each carrier (sine or cosine) is a sinc (sinx/x) envelope centered at $f_c + \frac{nf_s}{N}$ with zero crossings at intervals of $\frac{f_s}{N}$. The sinc envelop about each carrier has two undesirable effects. First, as the block size becomes larger, OFDM becomes more sensitive to carrier frequency offsets. In OFDM, carrier offset introduces intersymbol interference (ISI) in much the same manner as timing offset introduces ISI in a quadrature amplitude modulation (QAM) system. Second, the signal rolloff around each carrier has a $1/f$ characteristic which directly impacts the amount of energy spilled into neighboring carriers.

An $N$-point FFT will produce $N$ sinc functions separated by $\frac{f_s}{N}$. Consequently, the power spectral density (PSD) of the modulated signal is the sum of these sinc functions. This results in larger skirts for the occupied bandwidth and a high sensitivity to carrier frequency effects (e.g., ISI).

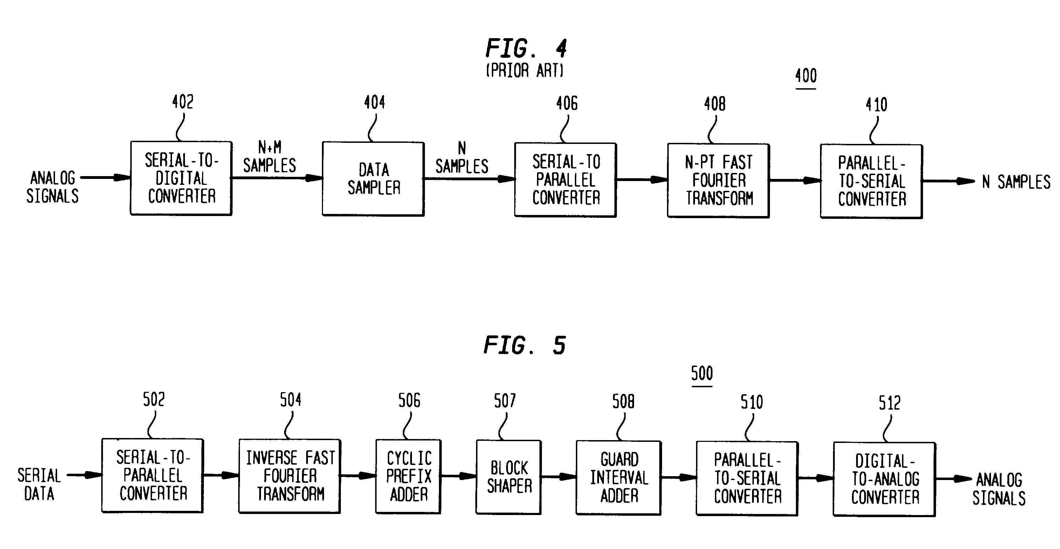

Referring now to Fig. 4, there is shown a block diagram of conventional OFDM demodulator **400**. Analog-to-digital (A/D) converter **402** converts received analog signals to $N+M$ digital samples for each received block and data sampler **404** samples the digitized data to recover the $N$ original samples of OFDM data ignoring any samples corresponding to extensions **204** and guard intervals **206** of Fig. 2. S/P converter **406** converts the serial data stream into $N$ parallel data streams for N-point FFT **408**. The parallel output of FFT **408** is converted to serial data by parallel-to-serial (P/S) converter **410** to recover the original $N$ samples for each of the received blocks.

In order for receiver **400** to recover accurately the original $N$ samples for each block, data sampler **404** must be able to sample the digitized received stream at the appropriate times to discard the extensions **204** and retain the OFDM data **202**, so that the data input to N-point FFT **408** is the correct data (i.e., only OFDM data **202**). Deviations in that sampling will result in data sampler **404** passing incorrect data to FFT **408** resulting in a failure of receiver **400** to recover the original $N$ samples.

The present invention is an improved OFDM-based communications scheme that addresses some of the problems of conventional OFDM-based communications schemes.

Further aspects and advantages of this invention will become apparent from the detailed description which follows.

## SUMMARY OF THE INVENTION

The present invention is directed to communications methods and apparatuses. According to one embodiment, blocks of orthogonal frequency division multiplexing (OFDM) data are generated; a shaping function is applied to at least one end of each block to generate shaped blocks of data, wherein the shaping function extends into the OFDM data; and the shaped blocks of data are transmitted.

According to another embodiment, blocks of data are received, wherein each block corresponds to $N$ samples of OFDM data and $M$ samples of extension. $N+M$ samples are generated for each received block and the $N+M$ samples are padded to $K*N$ samples for each received block, where $K$ is an integer greater than 1. A $K*N$-point Fourier transform is applied to the padded samples for each received block to decode the received blocks of data.

## BRIEF DESCRIPTION OF THE DRAWINGS

Other aspects, features, and advantages of the present invention will become more fully apparent from the following detailed description, the appended claims, and the accompanying drawings in which:

Fig. 1 is a block diagram of a conventional OFDM modulator;
Fig. 2 is a representation of the data generated by the OFDM modulator of Fig. 1;
Fig. 3 shows a representation of OFDM processing;
Fig. 4 is a block diagram of a conventional OFDM demodulator;
Fig. 5 is a block diagram of an OFDM modulator, according to one embodiment of the present invention;
Fig. 6 is a representation of the data generated by the OFDM modulator of Fig. 5; and
Fig. 7 is a block diagram of an OFDM demodulator, according to one embodiment of the present invention.

## DETAILED DESCRIPTION

The present invention is directed to improved schemes for OFDM-based communications. In one embodiment, in the transmitter, extended blocks of data, each containing $N$ OFDM samples, are generated and a raised cosine shaping function is then applied to each extended block, where the raised cosine shaping function extends into the original OFDM data. In the receiver, according to one embodiment, the received data is sampled and then padded with zeros to generate $K*N$ samples per block, where $K$ is an integer greater than 1. The $K*N$ samples are then input to a $K*N$-point Fourier transform. The $N$ original OFDM samples are then recovered from the resulting data. In a preferred embodiment, $K*N$ is equal to an integer power of 2 and the Fourier transform is an FFT.

Referring now to Fig. 5, there is shown a block diagram of an OFDM modulator **500**, according to one embodiment of the present invention. S/P converter **502** converts a serial input data stream into $N$ parallel streams of complex symbols $x(n)$, such that:

$$x(n) = x_r(n) + jx_i(n) ; \quad n = 0,...,N\text{-}1$$

Inverse FFT **504** is then applied to the $N$ symbol streams. Cyclic prefix adder **506** adds extensions to each end of each resulting data block. Block shaper **507** applies a shaping function (e.g., a raised cosine shaping function) to each extended block, where the shaping function preferably extends into the original OFDM data. Guard interval adder **508** adds a guard interval between each consecutive pair of the resulting shaped blocks. P/S converter **510** converts the data into a serial data stream which is converted by D/A converter **512** into analog signals for transmission. Those skilled in the art will understand that guard interval adder **508** and the guard intervals added between consecutive blocks are optional.

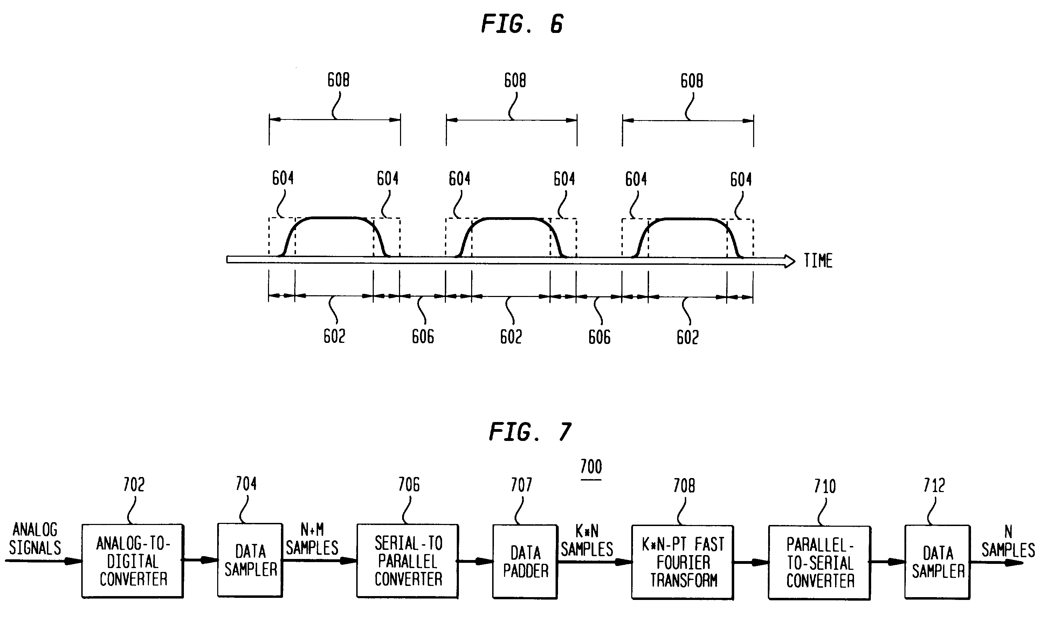

Referring now to Fig. 6, there is shown a representation of the data generated by OFDM modulator **500** of Fig. 5. An extension **604** (shown in broken lines) is added to each end of each block of OFDM data (**602**) to generate each extended block. The shaping function is then applied to the extended blocks to generate the shaped blocks **608**. As shown in Fig. 6, the effects of the shaping function extend into the original OFDM data **602**. Consecutive shaped blocks **608** are then optionally separated by guard intervals **606**.

Referring now to Fig. 7, there is shown a block diagram of OFDM demodulator **700**, according to one embodiment of the present invention. A/D converter **702** converts received analog signals to digital samples and data sampler **704** samples the digitized data to recover the $N+M$ samples corresponding to each shaped block **608** of Fig. 6. S/P converter **706** converts each set of $N+M$ serial samples into one parallel sample of width *N+M.* Data padder **707** pads the data with zeros on each end to generate *K\*N* samples per block as input to *K\*N*-point Fourier transform **708**.

In the general case, *K* is an integer greater than 1 and Fourier transform **708** is an appropriate discrete Fourier transform. In a preferred embodiment, *K\*N* is an integer power of 2 and Fourier transform **708** is a fast Fourier transform. For example, in one implementation in which Fourier transform **708** is an FFT, there are *N*=16 OFDM samples per block, *M*=6 extension samples per block, and *K*=2 such that Fourier transform **708** is a 32-point FFT.

The parallel output of FFT **708** is converted to serial data by P/S converter **710** to recover the original *N* OFDM samples for each of the received shaped blocks.

Those skilled in the art will understand that the present invention increases the out-of-band rolloff by utilizing the raised cosine shaped window (in the time domain) instead of the conventional square window. This will have the dual effect of reducing the skirts of the frequency response (i.e., increasing the rolloff) while at the same time increasing the system's immunity to carrier frequency offset effects which cause ISI in the frequency domain. As a result, block size may be increased and/or several OFDM services may be more closely packed within an allocated band. One implication of this method of shaping is that the receiver collects data for the duration of the receive window (including the guard and shaping intervals), pads with zeros to an appropriate number of points (e.g., *K\*N*), and then performs a *K\*N*-point FFT to recover the original symbols. Preliminary analysis and simulation has shown this technique to be effective in the presence of a multipath channel as well as an additive white Gaussian noise (AWGN) channel.

Those skilled in the art will understand that alternative embodiments of the present invention may be implemented. For example, in OFDM demodulator **700**, data padding may be implemented before S/P conversion. It will also be understood that the transmitter of modulator **500** and the receiver of demodulator **700** perform functions other than those depicted in the figures. For example, in the receiver, the carrier frequency is recovered, synchronization is performed to identify where block sampling should begin and end, and the frequencies of the sampling clocks in the A/D and D/A converters are matched.

In the embodiments described above, a raised cosine shaping function, which is symmetric, is applied to each extended block of data. Those skilled in the art will understand that alternative embodiments of the present invention are possible. For example, other shaping functions could be used, such as, but not necessarily limited to, Gaussian shaping functions. It will also be understood that, in some embodiments, a shaping function could be applied to one end of each extended block, but not the other end. Furthermore, a shaping function of the present invention could be applied to unextended blocks of data.

**Claims**

1. A communications method, comprising the steps of:

   (a) generating blocks of orthogonal frequency division multiplexing data;
   (b) applying a shaping function to at least one end of each block to generate shaped blocks of data, wherein the shaping function extends into the orthogonal frequency division multiplexing data; and
   (c) transmitting the shaped blocks of data.

2. The method of claim 1, wherein the shaping function is a raised cosine shaping function or a Gaussian shaping function.

3. The method of claim 1 or claim 2, wherein:

   step (a) comprises the steps of:

   (1) convening an input data stream from serial to parallel; and
   (2) applying an inverse Fourier transform to the parallel data stream; and

   step (b) comprises the steps of:

   (1) ) adding an extension to each end of each block to generate extended blocks of data;
   (2) applying the shaping function to each end of each extended block;
   (3) adding a guard interval between successive shaped blocks;
   (4) converting the shaped blocks from prallel to serial; and
   (5) applying digital-to-analog conversion to the serial data.

4. The method of any of claims 1 to 3, wherein step (b) comprises the steps of:

   (1) adding an extension to each end of each block to generate extended blocks of data; and
   (2) applying the shaping function to at least one end of each extended block to generate the shaped blocks.

5. The method of claim 4, further comprising the steps of:

   (d) receiving the shaped blocks of data, wherein each shaped block of data corresponds to *N* samples of orthogonal frequency division multiplexing data and $M$ samples of extension;

(e) generating $N+M$ samples for each received shaped block;

(f) padding the $N+M$ samples to $K*N$ samples for each received shaped block, where $K$ is an integer greater than 1; and

(g) applying a $K*N$-point Fourier transform to the padded samples for each received shaped block to decode the received shaped blocks of data.

6. The method of claim 5, wherein $K*N$ is equal to an integer power of 2 and the $K*N$-point Fourier transform is a fast Fourier transform.

7. A communications apparatus, comprising means for carrying out each step of a method as claimed in any of the preceding claims.

8. A communications method, comprising the steps of:

(a) receiving blocks of data, wherein each block corresponds to $N$ samples of orthogonal frequency division multiplexing data and $M$ samples of extension;

(b) generating $N+M$ samples for each received block;

(c) padding the $N+M$ samples to $K*N$ samples for each received block, where $K$ is an integer greater than 1; and

(d) applying a $K*N$-point Fourier transform to the padded samples for each received block to decode the received blocks of data.

9. The invention of claim 8, wherein $K*N$ is equal to an integer power of 2 and the $K*N$-point Fourier transform is a fast Fourier transform.

10. A communications apparatus, comprising:

(a) means for receiving blocks of data, wherein each block corresponds to $N$ samples of orthogonal frequency division multiplexing data and $M$ samples of extension:

(b) means for generating $N+M$ samples for each received block;

(c) means for padding the $N+M$ samples to $K*N$ samples for each received block, where $K$ is an integer greater than 1; and

(d) means for applying a $K*N$-point Fourier transform to the padded samples for each received block to decode the received blocks of data.

11. The invention of claim 10, wherein $K*N$ is equal to an integer power of 2 and the $K*N$-point Fourier transform is fast Fourier transform.

## FIG. 1
(PRIOR ART)

100

SERIAL DATA → | SERIAL-TO-PARALLEL CONVERTER | → | INVERSE FAST FOURIER TRANSFORM | → | CYCLIC PREFIX ADDER | → | GUARD INTERVAL ADDER | → | PARALLEL-TO-SERIAL CONVERTER | → | DIGITAL-TO-ANALOG CONVERTER | → ANALOG SIGNALS

102   104   106   108   110   112

## FIG. 2
(PRIOR ART)

208   208   208

204   204   204   204   204   204

TIME

202   206   202   206   202

EP 0 849 919 A2

FIG. 3
(PRIOR ART)

## FIG. 4
### (PRIOR ART)

400

ANALOG SIGNALS →

**402** SERIAL-TO-DIGITAL CONVERTER

→ N+M SAMPLES →

**404** DATA SAMPLER

→ N SAMPLES →

**406** SERIAL-TO PARALLEL CONVERTER

→

**408** N-PT FAST FOURIER TRANSFORM

→

**410** PARALLEL-TO-SERIAL CONVERTER

→ N SAMPLES

## FIG. 5

500

SERIAL DATA →

**502** SERIAL-TO-PARALLEL CONVERTER

→

**504** INVERSE FAST FOURIER TRANSFORM

→

**506** CYCLIC PREFIX ADDER

→

**507** BLOCK SHAPER

→

**508** GUARD INTERVAL ADDER

→

**510** PARALLEL-TO-SERIAL CONVERTER

→

**512** DIGITAL-TO-ANALOG CONVERTER

→ ANALOG SIGNALS

EP 0 849 919 A2

## FIG. 6

## FIG. 7

EP 0 849 919 A2